# EUROPÄISCHE PATENTSCHRIFT

(11) **EP 0 425 782 B1**
(45) Veröffentlichungstag und Bekanntmachung des Hinweises auf die Patenterteilung: **02.06.1993**
(21) Anmeldenummer: 90116047.3
(22) Anmeldetag: 22.08.1990
(51) Int. Cl.: E21B 17/042, E21B 7/06, F16L 15/08

(54) **Rohrverbindung für Rohrteile eines Bohrrohrstranges**
Pipe connection for a drill string
Connexion de tubes pour train de forage

(30) Priorität: 02.11.1989 DE 3936362
(43) Veröffentlichungstag der Anmeldung: 08.05.1991
(73) Patentinhaber: Eastman Teleco Company, Houston, Texas 77032-1925 (US)
(72) Erfinder: Witte, Johannes, Dipl.-Ing., D-3300 Braunschweig (DE)
(74) Vertreter: Busse & Busse Patentanwälte

(56) Entgegenhaltungen:
- DE-B- 1 229 945
- DE-C- 3 308 441
- US-A- 1 855 363
- US-A- 4 304 428
- US-A- 4 397 484
- US-A- 4 507 842
- US-A- 4 813 497
- US-A- 4 817 740

## Beschreibung

Die Erfindung bezieht sich auf eine Rohrverbindung als Bestandteil eines Bohrrohrstranges, insbesondere eines Tiefbohrwerkzeugs wie eines Motors zum Richtbohren, gemäß dem Oberbegriff des Patentanspruchs 1.

Eine bekannte Rohrverbindung dieser Art (US-A-4 813 497) dient dazu, den zu verbindenden Rohrteilen eine gegenseitige Achsausrichtung vorgeben zu können, die innerhalb eines vorgegebenen Knickwinkelbereiches veränderbar ist. Zu diesem Zweck weist die insgesamt fünfteilige Rohrverbindung einen rohrförmigen Innenteil auf, der an seinem einen Ende mit einem Außengewinde direkt mit dem Innengewinde eines der zu verbindenden Rohrteile verschraubbar ist. Das Außengewinde des Innenteils hat dabei eine Gewindeachse, die mit der Hauptachse des Innenteils einen Winkel einschließt, dessen Größe der halben Größe des maximal einstellbaren Knickwinkels für die Rohrverbindung entspricht.

Auf dem Innenteil ist axial verschieblich und dabei um die Hauptachse des Innenteils drehbar ein rohrförmiges Anschlußteil vorgesehen, das an seinem einen Ende ein mit dem Innengewinde des zweiten zu verbindenden Rohrteils verschraubbares Innengewinde hat. Dieses Außengewinde hat eine Gewindeachse, die mit der Hauptachse des Innenteils ebenfalls einen spitzen Winkel einschließt, dessen Größe ebenfalls der halben Größe des maximal einstellbaren Knickwinkels für die Rohrverbindung entspricht. Das Anschlußteil weist an dem seinem Außengewinde abgewandten Ende eine Stirnverzahnung auf und steht über diese in formschlüssigem Eingriff mit einer stirnverzahnung an einem rohrförmigen Außenteil, das auf dem Innenteil axial verschieblich, dabei jedoch gegen Verdrehen um die Hauptachse des Innenteils gesichert ist. Das Außenteil und das Anschlußteil werden in gegenseitigem Formschluß durch zwei Muttern gehalten, die jeweils mit einem Außengewinde auf dem Innenteil in Schraubeingriff und an ihren einander zugewandten Stirnflächen jeweils mit den einander abgewandten Stirnflächen des Außenteils bzw. des Anschlußteils in Druckeingriff stehen. Durch Lösen des Druckeingriffs zwischen Außenteil und der mit diesem in Eingriff stehenden Mutter kann das Außenteil außer verriegelungseingriff mit dem Anschlußteil verschoben und das Anschlußteil relativ zum Innenteil um dessen Hauptachse in einem gewünschten Ausmaß verdreht werden, wonach die Verriegelung zwischen dem Außenteil und dem Anschlußteil wieder hergestellt und durch Anziehen der auf den Außenteil einwirkenden Mutter gesichert werden kann. Je nach Ausrichtung des Anschlußteils zum Innenteil läßt sich mit dieser Rohrverbindung ein Knickwinkel zwischen den Achsen der zu verbindenden Rohrteile innerhalb eines Bereiches einstellen, dessen Minimalwert Null beträgt und dessen Maximalwert sich aus der Summe der Winkel ergibt, um den die Gelenkachsen der Anschlußgewinde für die zu verbindenden Rohrteile von der Hauptachse des Innenteils der Rohrverbindung abgewinkelt sind.

Eine derartige Rohrverbindung ist baulich und in ihrer Handhabung aufwendig, hat eine gegenüber der Festigkeit der zu verbindenden Rohrteile reduzierte Festigkeit, erlaubt Winkelveränderungen nur in Stufen, die durch die Stirnverzahnung zwischen Außenteil und Anschlußteil vorgegeben sind, und bietet keine geschlossene Außenkontur im Verbindungsbereich dar.

Bei einer anderen bekannten Rohrverbindung mit einstellbarem Knickwinkel zwischen den zu verbindenden Rohrteilen (US-A-4 817 740) sind zwei Bestandteil der Rohrverbindung bildende Rohrkörper vorgesehen, die über Gewinde mit jeweils abgewinkelten Gewindeachsen direkt miteinander verbunden sind. Der Knickwinkel zwischen den zu verbindenden Rohrteilen des Bohrrohrstrangs ändert sich mit der Eingriffslänge der miteinander verschraubten abgewinkelten Gewinde der Rohrkörper und diese wird jeweils durch Distanzglieder bestimmt, die zwischen beiden Rohrkörpern angebracht werden.

Auch eine derartige Ausbildung ist baulich und in der Handhabung aufwendig, ermöglicht nur stufenweise Verstellungen des Knickwinkels zwischen den zu verbindenden Rohrteilen in Abhängigkeit von der Abstufung der vorhandenen Distanzstücke und verursacht bei einem Verstellen des Knickwinkels eine Verstellung des axialen Abstandes zwischen den zu verbindenden Rohrstücken.

Es ist ferner eine Rohrverbindung von miteinander in Schraubeingriff stehenden Rohrteilen eines Bohrrohrstranges bekannt (DE-C-33 08 441), bei der ein Distanzkörper vorgesehen ist, der zwischen die einander zugewandten Stirnflächen der zu verbindenden Rohrteile einsetzbar ist und aus Segmenten besteht, die zwischen den Stirnflächen der zu verbindenden Rohre zu einem Ring zusammenfügbar sind. Eine derartige Rohrverbindung ermöglicht eine Einstellung der zu verbindenden Rohre in ihrem gegenseitigen Abstand ohne Lösen der gegenseitigen Verschraubung der Rohrteile. Eine solche Abstandsverstellung ermöglicht beispielsweise die Veränderung die Federvorspannung einer axialen, zwischen Schultern der zu verbindenden Rohrteile angeordneten Feder, geht allerdings mit Veränderungen in der rotatorischen Ausrichtung der zu verbindenden Rohrteile einher.

Der Erfindung liegt die Aufgabe zugrunde, eine baulich besonders einfache, einen geschlossenen Übergang zwischen den zu verbindenden Rohrteilen sichernde Rohrverbindung zu schaffen, die unterschiedliche Möglichkeiten der gegenseitigen Zuordnung der zu verbindenden Rohrteile eröffnet.

Die Rohrverbindung nach der Erfindung löst diese Aufgabe mit den Merkmalen des Patentanspruchs 1. Hinsichtlich wesentlicher weiterer Ausgestaltungen wird auf die Ansprüche 2 bis 18 verwiesen.

Die Rohrverbindung nach der Erfindung besteht in allen Ausführungen aus wenigen einfachen Teilen, die ebenso einfache wie schnelle Einstellungsveränderungen erlaubt. Dabei bietet die Rohrverbindung eine hohe Verbindungsfestigkeit dar, so daß der Bohrrohrstrang im Bereich der Rohrverbindung gegenüber einer üblichen Gewindeverbindung keine Schwächung erfährt. Die Rohrverbindung erfordert für die Verwirklichung spezieller Einstellmöglichkeiten jeweils nur geringfügige bauliche Variationen.

Zahlreiche weitere Einzelheiten und Vorteile ergeben sich aus der nachfolgenden Beschreibung und der Zeichnung, in der mehrere Ausführungsbeispiele der Rohrverbindung nach der Erfindung näher veranschaulicht sind. In der Zeichnung zeigen:
- Fig. 1: einen abgebrochenen Längsschnitt durch einen Bereich eines Bohrrohrstranges zur Veranschaulichung einer ersten Ausführung einer Rohrverbindung nach der Erfindung,
- Fig. 2: einen abgebrochenen Längsschnitt durch einen Bereich eines Bohrrohrstranges zur Veranschaulichung einer zweiten Ausführung einer Rohrverbindung nach der Erfindung,
- Fig. 3: einen abgebrochenen Längsschnitt durch einen Bereich eines Bohrrohrstranges zur Veranschaulichung einer dritten Ausführung einer Rohrverbindung nach der Erfindung,
- Fig. 4: einen abgebrochenen Längsschnitt durch einen Bereich eines Bohrrohrstranges zur Veranschaulichung einer vierten Ausführung einer Rohrverbindung nach der Erfindung,
- Fig. 5: einen abgebrochenen Längsschnitt durch einen Bereich eines Bohrrohrstranges zur Veranschaulichung einer fünften Ausführung einer Rohrverbindung nach der Erfindung,
- Fig. 6: einen abgebrochenen Längsschnitt durch einen Bereich eines Bohrrohrstranges zur Veranschaulichung einer sechsten Ausführung einer Rohrverbindung nach der Erfindung.

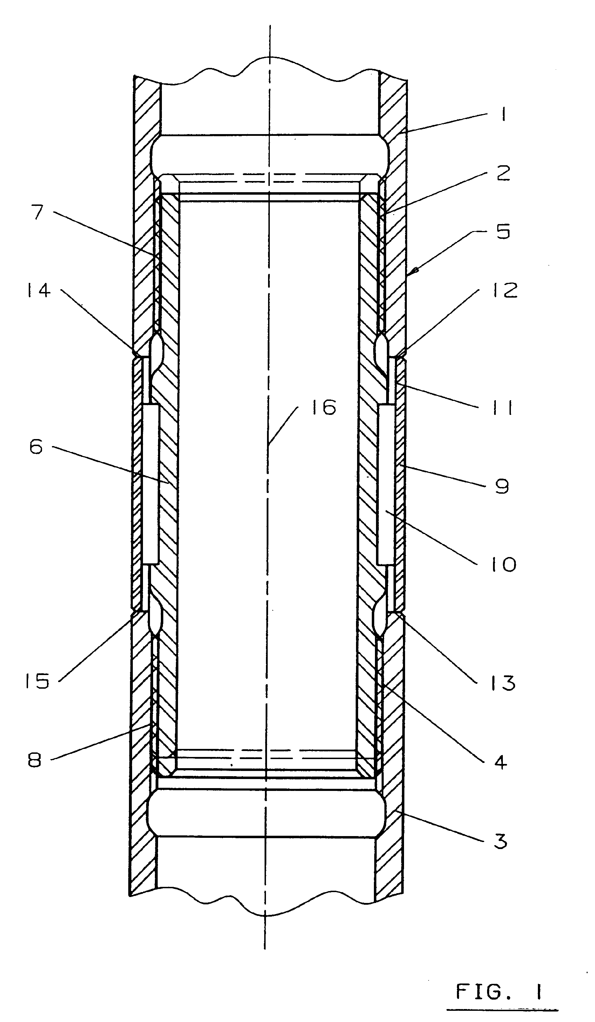

Die Fig. 1 veranschaulicht in abgebrochener Darstellung einen ersten Rohrteil 1 mit Innengewinde 2 an seinem dargestellten Ende, das einem zweiten Rohrteil 3 zugewandt ist. Dieser ist an seinem dargestellten, dem ersten Rohrteil 1 zugewandten Ende ebenfalls mit einem Innengewinde 4 versehen.

Die beiden untereinander zu verbindenden Rohrteile 1,3 sind Bestandteil eines Bohrrohrstranges 5 und können in diesem die Teile eines Außengehäuses für ein Werkzeug, z.B. eines Motors zum Richtbohren, oder auch Teil des Bohrrohrgestänges bilden. Statt dessen können die Rohrteile 1,3 auch Teil einer selbständigen Rohrverbindungsvorrichtung sein und an ihren dem Innengewinde 2 bzw. 4 jeweils abgewandten Ende mit einem Anschlußgewinde geeigneter Art und Ausbildung versehen sein. Dies gilt generell auch für die übrigen in der Zeichnung veranschaulichten Ausführungen.

Die Rohrverbindung in Fig. 1 umfaßt ein rohrförmiges Innenteil 6, das an seinen beiden einander abgewandten Enden jeweils mit einem Außengewinde 7 bzw. 8 versehen ist. An diesen Außengewinden 7,8 ist das Innenteil 6 der Rohrverbindung mit den Innengewinden 2 bzw. 4 der beiden zu verbindenden Rohrteile 1,3 verschraubt. Die Innengewinde 2,4 der Rohrteile 1,3 sind als zylindrische Gewinde ausgeführt und haben eine Länge, die größer ist als jene Länge, welche für einen die Verbindungsfestigkeit sichernden Verschraubungseingriff erforderlich ist. Dies gilt auch für die ebenfalls zylindrischen Außengewinde 7,8 des Innenteils 6. Dementsprechend bilden die Gewinde 2,7 bzw. 4,8 Stellgewindepaarungen, deren Eingriffstiefe jeweils veränderbar ist.

Die Verbindungsvorrichtung umfaßt ferner ein auf dem Innenteil 6 verschiebliches, rohrförmiges Außenteil 9, das auf dem Innenteil 6 verdrehfest abgestützt ist. Die axial verschiebliche und dabei zugleich verdrehfeste Abstützung kann durch eine Vielkeilprofilierung, durch in Nuten 11 eingreifende Paßfedern 10 oder durch sonst geeignete Führungs- und Sicherungsmittel verwirklicht sein.

Das Außenteil 9 bietet an seinen einander abgewandten Enden Stirnflächen 12,13 dar, die mit Stirnflächen 14,15 an den ihnen gegenüberliegenden Enden der zu verbindenden Rohrteile 1,3 in Verbindungs- bzw. Konterstellung der Teile in Druckeingriff stehen. Bei der Ausführung nach Fig. 1 sind sämtliche Stirnflächen 12 bis 15 ebene Ringflächen, die jeweils in einer zur Längsmittelachse 16 des Innenteils 6 senkrecht verlaufenden Ebene angeordnet sind. Ferner haben die Ringflächen 12,13 des Außenteils 9 Innen- bzw. Außendurchmesser, die zumindest im wesentlichen übereinstimmen mit den Innen- bzw. Außendurchmessern der Ringflächen 14,15 an den zu verbindenden Rohrteilen, so daß die Stirnflächen 12,14 bzw. 13,15 jeweils im wesentlichen bündig voreinander liegen und vollflächig in gegenseitigem Druckeingriff stehen, wenn sich die Teile in Verbindungsstellung befinden.

Ist wie bei der Ausführung nach Fig. 1 die Gewindesteigung in den Gewindepaarungen 2,7 bzw. 4,8 untereinander gleich, so besteht die Möglichkeit der Axialverstellung des Innenteils 6 relativ zum ersten bzw. zweiten Rohrteil 1,3, wie das die gestrichelt eingezeichnete Stellung für das Innenteil 6 veranschaulicht. Dies ermöglicht es beispielsweise, die axiale Vorspannung eines Axialfederpaketes zu verändern, das sich einerseits auf einer der Stirnflächen des Innenteils 6 oder einem von diesem getragenen Widerlager und andererseits an einer Widerlagerfläche abstützt, die dem ersten oder zweiten Rohrteil 1,3 zugeordnet ist. Statt dessen kann auch die Axialverstellung des Innenteils relativ zu den Rohrteilen 1,3 zur Veränderung der rotatorischen Ausrichtung des Innenteils 6 zu den Rohrteilen 1,3 herangezogen werden, beispielsweise um die Vorspannung einer zwischen dem Innenteil 6 und einem der Rohrteile 1,3 eingespannten Torsionsfeder zu verändern.

In allen Einstellungen hat der Bohrrohrstrang 5 im Bereich der Verbindung seiner Rohrteile 1,3 eine glatte, durchgehende und bei fluchtender Ausrichtung der Rohrteile 1,3 zylindrische Außenkontur, wenn wie dargestellt, der Außendurchmesser des Außenteils 9 dem Außendurchmesser der Rohrteile 1,3 entspricht.

Da mit einer rotatorischen Verstellung des Innenteils 6 zu den Rohrteilen 1,3 auch eine rotatorische Verstellung der Ausrichtung des Außenteils 9 zu den Rohrteilen 1,3 einhergeht, eröffnet die Rohrverbindung auch beispielsweise die Möglichkeit, den Außenteil 9 als Träger eines Werkzeugs, beispielsweise eines exzentrischen Stabilisators heranzuziehen, dessen Ausrichtung über den Außenteil 9 zu den Rohrteilen 1,3 mit Hilfe der Rohrverbindung veränderbar ist.

Zur Durchführung einer Verstellung wird bei der Ausführung nach Fig. 1 die Konterung entweder zwischen den Teilen 1, 9 oder den Teilen 3, 9 mit Hilfe von am Außenteil 9 und einem der Rohrteile 1 bzw. 3 angreifenden Drehmomenterzeugern gelöst, die gewünschte rotatorische bzw. axiale Verstellung des Innenteils 6 mitsamt Außenteil 9 zum Rohrteil 1 bzw. Rohrteil 3 vorgenommen und anschließend unter Aufrechterhaltung der Ausrichtung entweder der Teile 1,6 oder der Teile 3,6 zueinander die Verbindungsstellung der Teile durch Nachschrauben jenes Rohrteils 1 oder 3 wiederhergestellt, demgegenüber eine Ausrichtungsveranderung von Innen- und Außenteil 6,9 keine Bedeutung hat.

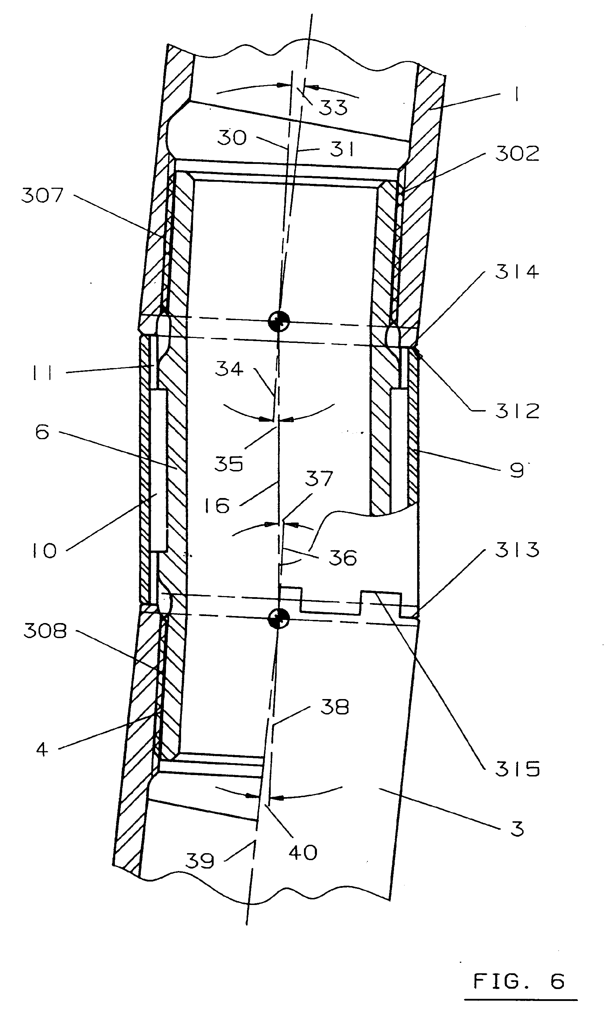

In Fällen, in denen das Außenteil 9 aus irgendwelchen Gründen eine nur so geringe axiale Abmessung aufweist, daß ein drehmomenterzeugendes Werkzeug an diesem nicht angesetzt werden kann, können die Stirnflächen einer stirnflächenpaarung 12,14 oder 13,15 entweder einen erhöhten Reibwert darbieten oder mit einer Riffelung oder Verzahnung,beispielsweise gemäß Fig. 6, versehen sein, um eine gezielte Konterung bzw. Dekonterung an der anderen Stirnflächenpaarung vornehmen zu können. Für Verstellzwecke bedarf es in diesem Falle erst einer Aufhebung einer beispielsweise durch eine Stirnverzahnung gegebenen Kupplung zwischen dem Außenteil 9 und einem der Rohrteile 1 bzw. 3, um das Innenteil 6 relativ zu diesem und damit zum anderen Rohrteil verstellen zu können.

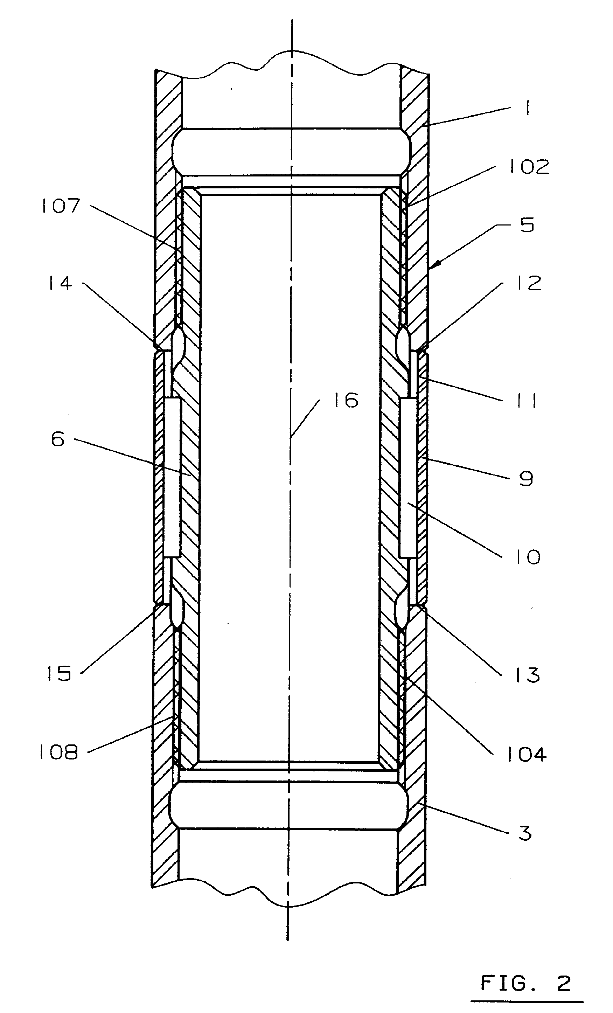

Die zweite Ausführung gemäß Fig. 2 der erfindungsgemäßen Rohrverbindung entspricht der nach Fig. 1 mit dem Unterschied, daß die Gewindesteigungen der Gewindepaarungen 102,107 bzw. 104, 108 der Innengewinde 102,104 der Rohrteile 1,3 mit den Außengewinden 107, 108 des Innenteils 6 voneinander abweichen. Dies eröffnet zusätzlich zu den Einstellmöglichkeiten der Ausführung nach Fig. 1 die Möglichkeit zur Veränderung der rotatorischen Ausrichtung des Rohrteils 1 zum Rohrteil 3 durch Axialverstellung des Einsatzteils 6 zu den Rohrteilen 1,3. Hierdurch kann beispielsweise eine zwischen den Rohrteilen 1,3 abgestützte Torsionsfeder in ihrer Vorspannung verändert werden, oder es kann beispielsweise die Ausrichtung eines exzentrischen, auf einem der beiden Rohrteile 1,3 angeordneten Stabilisators eine Veränderung erfahren.

In beiden Ausführungen gemäß Fig. 1 und 2 haben die Innengewinde 2,4 bzw. 102,104 der Rohrteile 1,3 Gewindeachsen, die mit der Längsmittelachse ihres Rohrteils 1 oder 3 zusammenfallen. Gleichermaßen fallen die Gewindeachsen der Außengewinde 7,8 bzw. 107,108 mit der Längsmittelachse 16 des Innenteils 6 und damit die Längsmittelachsen der Teile 1,3 und 6 zusammen. Die Rohrverbindung gemäß Fig. 1 und 2 bietet daher keine Möglichkeit zur Bildung eines variablen Knickwinkels zwischen den Rohrteilen 1,3.

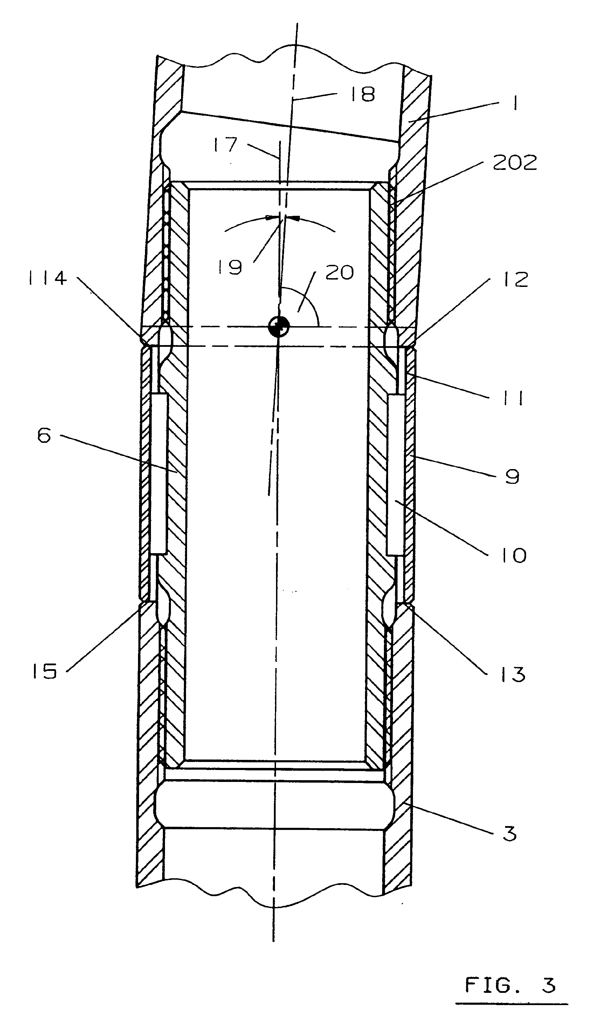

Diese Möglichkeit ist hingegen bei den Ausführungen nach Fig. 3 bis 6 gegeben, auf die nachfolgend näher eingegangen wird.

Die Ausführung nach Fig. 3 weicht von der nach Fig. 1 (oder Fig. 2) dadurch ab, daß das Innengewinde eines der Rohrteile 1 oder 2, bei dem dargestellten Beispiel das Innengewinde 202 des Rohrteils 1, eine Gewindeachse 17 aufweist, die mit der Längsmittelachse 18 ihres Rohrteils 1 einen spitzen Winkel 19 einschließt.

Eine derartige Rohrverbindung schafft beispielsweise einen als "bent sub" bezeichneten Rohrkörper, wie er zu Richtungsbohrungsabeiten Verwendung findet. Zugleich sind bei der Ausführung nach Fig. 3 sämtliche Einstellungsmöglichkeiten der Ausführungen nach Fig. 1 bzw. 2 gegeben. Die rotatorische Verstellbarkeit des Rohrteils 1 zum Rohrteil 3 hat besondere Bedeutung in Fällen, in denen dem Rohrteil 3 seinerseits eine Knickstelle zugeordnet ist und eine Ausrichtung der Knickstelle zwischen dem Rohrteil 1 und dem Rohrteil 3 zur Knickstelle des Rohrteils 3 erwünscht ist.

Anzumerken ist, daß die Stirnfläche 114 des Rohrteils 1 in Fig. 3 in einer Ebene liegt, die mit der Längsmittelachse 18 des Rohrteils 1 einen von 90° abweichenden Winkel 20 einschließt, wobei der Betrag der Winkelabweichung von 90° dem Betrag des Winkels 19 entspricht. Dadurch ist sichergestellt, daß die Stirnflächen 12,114 eine untereinander parallele, zur Gewindeachse 17 senkrechte Ausrichtung aufweisen und auch im Bereich der Knickstelle die geschlossene Außenkontur erhalten bleibt.

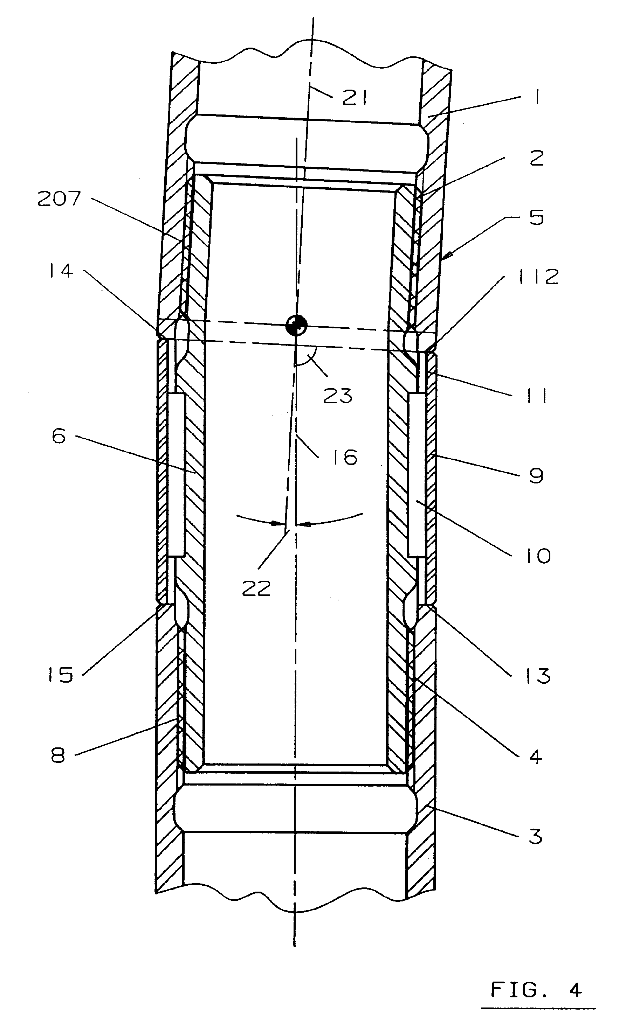

Die Ausführung nach Fig. 4 unterscheidet sich von der nach Fig. 1 (oder Fig. 2) dadurch, daß ein Außengewinde des Innenteils 6, bei dem dargestellten Beispiel das Außengewinde 207, eine Gewindeachse 21 aufweist, die mit der Längsmittelachse 16 des Innenteils 6 einen Winkel 22 einschließt. Diese Ausführung bietet ähnliche Einstellungsmöglichkeiten wie sie für die Ausführung nach Fig. 3 gegeben sind, jedoch mit einer Rohrverbindung für Rohrteile 1,3 mit koaxialem Verlauf der Gewindeachsen beider Innengewinde 2,4 zu den Längsmittelachsen ihrer Rohrteile 1,3.

Ein weiterer Unterschied der Ausführung nach Fig. 4 zu der nach Fig. 1 (oder Fig. 2) besteht darin, daß die Stirnfläche 112 des Außenteils 9 in einer Ebene liegt, die mit der Längsmittelachse 16 des Innenteils 6 einen von 90° um einen Betrag abweichenden Winkel 23 einschließt, der dem Betrag des Winkels 22 entspricht. Dadurch ist auch bei dieser Ausführung die geschlossene Außenkontur im Bereich der Knickstelle gewährleistet, da die Stirnflächen 14,112 eine untereinander parallele Ausrichtung haben.

Zusätzlich zu den Einstellungsmöglichkeiten, wie sie die Ausführungsform nach Fig. 3 erbringt, ist noch die einfache Möglichkeit zur Veränderung des Knickwinkels zwischen den Rohrteilen 1,3 durch Austausch von Innenteil 6 und Außenteil 9 gegen solche mit abweichenden Beträgen der Winkel 22 bzw. 23 gegeben.

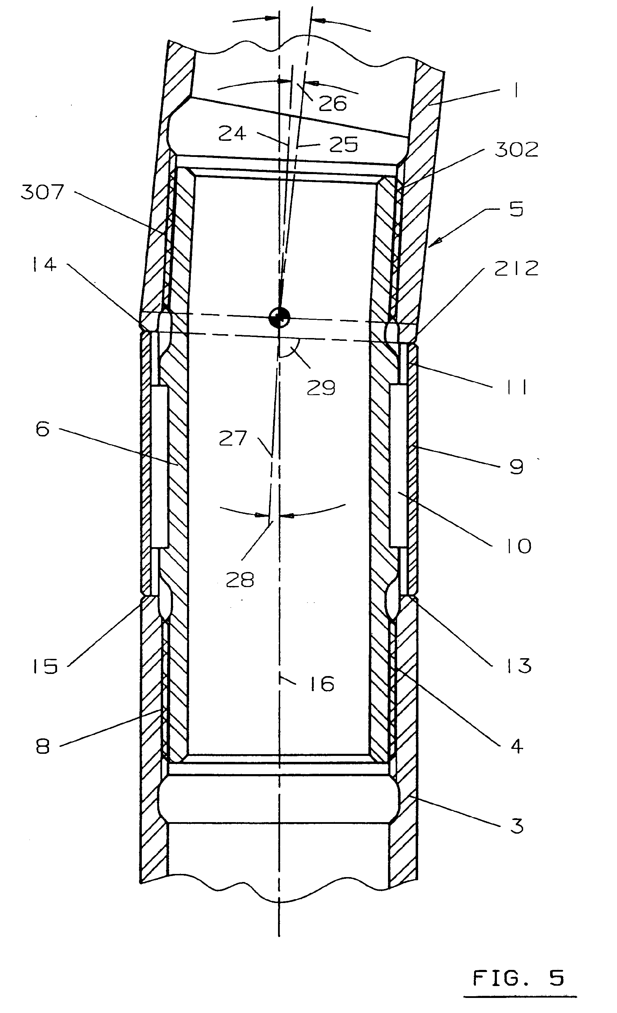

Die Ausführung nach Fig. 5 unterscheidet sich von der nach Fig. 1 (oder Fig. 2) dadurch, daß die Mittelachse des Innengewindes eines Rohrteils, bei dem dargestellten Beispiel die Gewindeachse 24 des Innengewindes 302 des Rohrteils 1, mit dessen Längsmittelachse 25 einen spitzen Winkel 26 einschließt, wie dies in ähnlicher Form bei der Ausführung nach Fig. 3 der Fall ist. Die Ausrichtung der Stirnfläche 114 verläuft senkrecht zur Längsmittelachse 24 des Innengewindes 203.

Ein weiterer Unterschied besteht darin, daß die in Fig. 5 mit der Gewindeachse 24 zusammenfallende Gewindeachse 27 des Außengewindes 307 des Innenteils 6 mit der Längsmittelachse 16 des Innenteils 6 einen spitzen Winkel 28 einschließt, dessen Betrag mit dem Betrag des Winkels 26 übereinstimmen oder aber auch von diesem abweichen kann. Die Stirnfläche 212 am Außenteil 9 verläuft in einer Ebene, die mit der Längsmittelachse 16 des Innenteils 6 einen von 90° abweichenden Winkel 29 einschließt, wobei der Betrag der Winkelabweichung dem Betrag des Winkels 28 entspricht. Dadurch ist auch bei dieser Ausführung eine geschlossene Außenkontur im Bereich der Knickstelle durch Parallelverlauf der Stirnflächen 114,212 gewährleistet.

Bei der Ausführung nach Fig. 5 kann zwischen den Rohrteilen 1,3 ein stufenlos einstellbarer Knickwinkel ausgebildet werden, wobei die Einstellungsmöglichkeit einen Winkelbereich erfaßt, dessen oberer Grenzwert durch die Summe der Beträge der Winkel 26 und 28 und deren unterer Grenzwert durch die Differenz zwischen den Winkeln 26 und 28 definiert ist. Dieser Bereich schließt einen Knickwinkel von 0° ein für den Fall, daß die Winkel 26 und 28 in den Beträgen gleich groß sind. Eine derartige stufenlose Knickwinkeleinstellung ist unabhängig von besonderen Distanzierungsmitteln und im übrigen frei von Abstandsveränderungen zwischen den Rohrteilen 1,3.

Die Ausführung nach Fig. 6 unterscheidet sich von der nach Fig. (oder Fig. 2) dadurch, daß die Gewindeachse 30 des Innengewindes 302 des Rohrteils 1 mit dessen Längsmittelachse 31 einen spitzen Winkel 33 einschließt, daß die mit der Gewindeachse 30 zusammenfallende Gewindeachse 34 des Außengewindes 307 mit der Längsmittelachse 16 des Innenteils 6 einen spitzen Winkel 35 einschließt, daß die Gewindeachse 36 des Außengewindes 308 des Innenteils 6 mit dessen Längsmittelachse 16 einen spitzen Winkel 37 einschließt und daß schließlich die mit der Gewindeachse 36 zusammenfallende Gewindeachse 38 des Rohrteils 3 mit desssen Längsmittelachse 39 einen spitzen Winkel 40 einschließt. Die Stirnflächen 312 und 314 sind untereinander parallel und rechtwinklig zu den Längsmittelachsen 34 bzw. 30 ausgerichtet, und auch die Teil einer Stirnverzahnung bildenden Stirnflächen 313 und 315 der Teile 6,3 verlaufen in zueinander parallelen Ebenen, die mit den Längsmittelachsen 36 bzw. 38 einen Winkel von 90° bilden.

Eine derartige Ausführung ermöglicht es, bei gleich großen Winkeln 33,35,37,40 einen variablen Axialversatz zwischen den Längsmittelachsen 31,39 der Rohrteile 1,3 zu verwirklichen.

Auch kann ein Knickwinkel zwischen den Rohrteilen 1, 3 verwirklicht werden, dessen Maximalwert der Summe der Beträge der Winkel 33,35,37 und 40 entspricht. Auf diese Weise kann mit relativ kleinen Abwinklungen der Gewindeachsen ein relativ großer Gesamtknickwinkel realisiert werden.

Schließlich besteht auch die Möglichkeit, mit unterschiedlichen Beträgen der (untereinander gleich großen) Winkel 33,35 einerseits und der (ihrerseits untereinander gleich großen) Winkel 37,40 andererseits ein variables Doppelknickstück zu schaffen, bei dem zwischen dem ersten Rohrteil 1 und dem zweiten Rohrteil 3 ein resultierender Knickwinkel vorliegt, zugleich aber der vom Außenteil 9 gebildete Zwischenbereich zwischen den Enden der Rohrteile 1,3 eine entgegengesetzte Abknickung hat. Eine derartige Ausgestaltung ist insbesondere bei Navigationsbohrwerkzeugen von Bedeutung.

Wie sich aus Vorstehendem ergibt, schafft die Erfindung eine universelle Rohrverbindung, die in der Tiefbohrtechnik die verschiedensten Einstellmöglichkeiten mit einfachen Mitteln realisiert. Grundsätzlich ist die erfindungsgemäße Rohrverbindung ohne weiteres auch einsetzbar für die Verbindung von Gegenständen aller Art mit jeweils rohrförmigen Ansätzen oder Teilen analog den Rohrteilen 1,3.

## Patentansprüche

1. Rohrverbindung als Bestandteil eines Bohrrohrstranges (5), insbesondere eines Tiefbohrwerkzeugs wie eines Motors zum Richtbohren, gebildet aus einem ersten und zweiten Rohrteil (1,3), wobei die einander zugewandten Enden jeweils mit einem Innengewinde (2,4) versehen sind, aus einem rohrförmigen Innenteil (6), das an seinen einander abgewandten Enden ein erstes und zweites Außengewinde (7,8) aufweist, wobei das erste Außengewinde (7) mit dem Innengewinde (2) des ersten Rohrteiles (1) verschraubt ist, und aus einem auf dem Innenteil (6) axial verschieblichen rohrförmigen Außenteil (9), das auf dem Innenteil (6) verdrehfest abgestützt ist, **dadurch gekennzeichnet,** daß das zweite Rohrteil (3) an seinem Innengewinde (4) mit dem zweiten Außengewinde (8) des Innenteils (6) verschraubt ist, und daß in Verbindungsstellung der Rohrteile (1,3) deren Stirnflächen (14,15) mit den diesen gegenüberliegenden Stirnflächen (12,13) des Außenteils (9) in Druckeingriff stehen.

2. Rohrverbindung nach Anspruch 1, **dadurch gekennzeichnet,** daß die Innengewinde (2,4) der Rohrteile (1,3) und die Außengewinde (7,8) des Innenteils (6) als zylindrische Gewinde ausgeführt sind.

3. Rohrverbindung nach Anspruch 1 oder 2, **dadurch gekennzeichnet,** daß die Gewinde (2,4,7,8) beider Gewindepaarungen untereinander gleiche Steigung aufweisen.

4. Rohrverbindung nach Anspruch 1 oder 2, **dadurch gekennzeichnet,** daß die Gewindesteigungen in den Gewindepaarungen (102,107;104,108) voneinander abweichen.

5. Rohrverbindung nach einem oder mehreren der Ansprüche 1 bis 4, **dadurch gekennzeichnet,** daß beide Außengewinde (7,8;107,108) des Innenteils (6) gleichsinnige Gewinde bilden.

6. Rohrverbindung nach einem oder mehreren der Ansprüche 1 bis 5, **dadurch gekennzeichnet,** daß beide Außengewinde (7,8;107,108) jeweils eine zur Längsmittelachse (16) des Innenteils (6) koaxiale Gewindeachse aufweisen.

7. Rohrverbindung nach einem oder mehreren der Ansprüche 1 bis 5, **dadurch gekennzeichnet,** daß das eine Außengewinde (8) des Innenteils (6) eine zu dessen Längsmittelachse (16) koaxiale Gewindeachse und das andere Außengewinde (207) eine solche (21) aufweist, die mit der Längsmittelachse (16) des Innenteils (6) einen spitzen Winkel (22) einschließt.

8. Rohrverbindung nach einem oder mehreren der Ansprüche 1 bis 5, **dadurch gekennzeichnet,** daß beide Außengewinde (307,308) des Innenteils (6) eine mit dessen Längsmittelachse (16) einen spitzen Winkel (35,37) einschließende Gewindeachse (34,36) aufweisen.

9. Rohrverbindung nach Anspruch 8, **dadurch gekennzeichnet,** daß die Gewindeachsen (34,36) der Außengewinde (307,308) in einer gemeinsamen Ebene verlaufen.

10. Rohrverbindung nach Anspruch 8, **dadurch gekennzeichnet,** daß die Gewindeachsen (34,36) der Außengewinde (307,308) in durch die Längsmittelachse (16) des Innenteils (6) verlaufenden, miteinander einen Winkel einschließenden Ebenen gelegen sind.

11. Rohrverbindung nach einem der Ansprüche 8 bis 10, **dadurch gekennzeichnet,** daß die Gewindeachsen (34,36) der Außengewinde (307,308) von der Längsmittelachse (16) des Innenteils (6) zu entgegengesetzten Seiten hin abgewinkelt sind.

12. Rohrverbindung nach einem der Ansprüche 8 bis 10, **dadurch gekennzeichnet,** daß die Gewindeachsen (34,36) der Außengewinde (307,308) von der Längsmittelachse (16) des Innenteils (6) zur gleichen Seite hin abgewinkelt sind.

13. Rohrverbindung nach einem oder mehreren der Ansprüche 1 bis 12, **dadurch gekennzeichnet,** daß beide Innengewinde (2,4;102,104) eine zur Längsmittelachse ihres Rohrteils (1,3) koaxiale Gewindeachse aufweisen.

14. Rohrverbindung nach einem oder mehreren der Ansprüche 1 bis 12, **dadurch gekennzeichnet,** daß das eine Innengewinde (4) eine zur Längsmittelachse seines Rohrteils (3) koaxiale Gewindeachse und das andere Innengewinde (202) eine solche (17) aufweist, die mit der Längsmittelachse (18) seines Rohrteils (1) einen spitzen Winkel (19) einschließt.

15. Rohrverbindung nach einem oder mehreren der Ansprüche 1 bis 12, **dadurch gekennzeichnet,** daß beide Innengewinde (302,304) eine jeweils mit der Längsmittelachse (31,39) ihrer Rohrteile (1,3) einen spitzen Winkel (33,40) einschließende Gewindeachse (30,38) aufweisen.

16. Rohrverbindung nach einem oder mehreren der Ansprüche 1 bis 15, **dadurch gekennzeichnet,** daß die Stirnflächen (12,13,14,15) jeder Stirnflächenpaarung zwischen dem Außenteil (9) und einem Rohrteil (1,3) eine untereinander parallele Ausrichtung aufweisen.

17. Rohrverbindung nach einem oder mehreren der Ansprüche 1 bis 16, **dadurch gekennzeichnet,** daß die Stirnflächen (313,315) einer Stirnflächenpaarung einen erhöhten Reibwert darbieten oder mit einer Riffelung oder Verzahnung versehen sind.

18. Rohrverbindung nach einem oder mehreren der Ansprüche 1 bis 17, **dadurch gekennzeichnet,** daß die Rohrteile (1,3) Bestandteil einer selbständigen Rohrverbindungsvorrichtung sind und an ihrem dem Ende mit Innengewinde (2,4) abgewandten Ende jeweils mit einem Anschlußgewinde versehen sind.

## Claims

1. A casing coupling as a component part of a drilling string (5), particularly of a deep drilling tool, such as a motor for directional drilling, formed by a first and second casing part (1, 3), the mutually facing ends being respectively provided with a female screw thread (2, 4), a tubular inner part (6) which has at its remote ends a first and second male screw thread (7, 8), the first male screw thread (7) being screwed together with the female screw thread (2) of the first casing part (1), and, adapted for axial displacement on the inner part (6), a tubular outer part (9) which is rotationally rigid on the inner part (6), characterised in that the second casing part (3) has its female screw thread (4) screwed together with the second male thread (8) on the inner part (6) and in that in the coupled position of the casing parts (1, 3), their end faces (14, 15) are engaged under pressure in the respectively opposite end faces (12, 13) of the outer part (9).

2. A casing coupling according to Claim 1, characterised in that the female screw thread (2, 4) on the casing parts (1, 3) and the male screw thread (7, 8) on the inner part (6) are constructed as parallel screw threads.

3. A casing coupling according to Claim 1 or 2, characterised in that the screw thread (2, 4; 7, 8) on both screw thread pairings have the same pitch as one another.

4. A casing coupling according to Claim 1 or 2, characterised in that the screw thread pitches in the screw thread pairings (102, 107; 104, 108) are different from one another.

5. A casing coupling according to one or more of Claims 1 to 4, characterised in that both male screw threads (7, 8; 107, 108) on the inner part (6) form an equi-directional screw thread.

6. A casing coupling according to one or more of Claims 1 to 5, characterised in that male screw threads (7, 8; 107, 108) respectively have a screw thread axis which is coaxial with the longitudinal central axis (16) of the inner part (6).

7. A casing coupling according to one or more of Claims 1 to 5, characterised in that one male screw thread (8) on the inner part (6) has a screw thread axis coaxial with its longitudinal central axis (16) while the other male screw thread (207) has a screw thread axis (21) which forms an acute angle (22) to the longitudinal central axis (16) through the inner part (6).

8. A casing coupling according to one or more of Claims 1 to 5, characterised in that both male screw threads (307, 308) on the inner part (6) have a screw thread axis (34, 36) which encloses an acute angle (35, 37) with its longitudinal central axis (16).

9. A casing coupling according to Claim 8, characterised in that the screw thread axes (34, 36) of the male screw thread (307, 308) extend in one common plane.

10. A casing coupling according to Claim 8, characterised in that the screw thread axes (34, 36) of the male screw thread (307, 308) are situated in planes which are at an angle to each other and which extend through the longitudinal central axis (16) of the inner part (6).

11. A casing coupling according to one of Claims 8 to 10, characterised in that the screw thread axes (34, 36) of the male screw thread (307, 308) are angled away from the longitudinal central axis (16) of the inner part (2) and towards opposite sides.

12. A casing coupling according to one of Claims 8 to 10, characterised in that the screw thread axes (34, 36) of the male screw thread (307, 308) are angled over from the longitudinal central axis (16) of the inner part (6) and to the same side.

13. A casing coupling according to one or more of Claims 1 to 12, characterised in that both female screw threads (2, 4; 102, 104) have a screw thread axis which is coaxial with the longitudinal central axis of their casing part (1, 3).

14. A casing coupling according to one or more of Claims 1 to 12, characterised in that one female screw thread (4) has a screw thread axis coaxial with the longitudinal central axis of its casing part (3) while the other female screw thread (202) has a screw thread axis (17) which forms an acute angle (19) to the longitudinal central axis (18) of its casing part (1).

15. A casing coupling according to one or more of Claims 1 to 12, characterised in that both female screw threads (302, 304) have a screw thread axis (30, 38) which encloses an acute angle (33, 40) with the respective longitudinal central axis (31, 39) of their casing parts (1, 3).

16. A casing coupling according to one or more of Claims 1 to 15, characterised in that the end faces (12, 13, 14, 15) of each end face pair between the outer part (9) and a casing part (1, 3) are aligned parallel with one another.

17. A casing coupling according to one or more of Claims 1 to 16, characterised in that the end faces (313, 315) of a pair of end faces offer an increased coefficient of friction or are provided with milling, knurling or toothed systems.

18. A casing coupling according to one or more of Claims 1 to 17, characterised in that the casing parts (1, 3) are components of an independent casing coupling device and are provided in each case with a connecting screw thread at their end which is remote from the end which has the female screw thread (2, 4).

## Revendications

1. Jonction de tubes faisant partie d'un train de tubes de forage (5), et en particulier d'un outil de forage profond tel qu'un moteur pour forage dirigé, constituée d'un premier et d'un second tube (1, 3) dont les extrémités tournées l'une vers l'autre sont chacune dotées d'un filetage intérieur (2, 4), d'une pièce intérieure tubulaire (6) qui, à ses extrémités opposées présente un premier et un second filetage extérieur (7, 8), le premier filetage extérieur (7) étant vissé dans le filetage intérieur (2) du premier tube (1), et d'une pièce extérieure tubulaire (9) pouvant être déplacée axialement sur la pièce intérieure (6) et maintenue calée en rotation sur la pièce intérieure (6), caractérisée en ce que le second tube (3) est vissé par son filetage intérieur (4) sur le second filetage extérieur (8) de la pièce intérieure (6), et en ce que lorsque les tubes (1, 3) sont en position de jonction leurs surfaces d'about (14, 15) sont en contact sous pression avec les surfaces d'about opposées (12, 13) de la pièce extérieure (9).

2. Jonction de tubes selon la revendication 1, caractérisée en ce que les filetages intérieurs (2, 4) des tubes (1, 3) et les filetages extérieurs (7, 8) de la pièce intérieure (6) sont des filetages cylindriques.

3. Jonction de tubes selon la revendication 1 ou 2, caractérisée en ce que les filetages (2, 4, 7, 8) des deux paires de filetages présentent des pas identiques.

4. Jonction de tubes selon la revendication 1 ou 2, caractérisée en ce que les pas des paires de filetages (102, 107) sont différents des pas des paires de filetages (104, 108).

5. Jonction de tubes selon une ou plusieurs des revendications 1 à 4, caractérisée en ce que les deux filetages extérieurs (7, 8; 107, 108) de la pièce intérieure (6) sont des filetages orientés dans le même sens.

6. Jonction de tubes selon une ou plusieurs des revendications 1 à 5, caractérisée en ce que les deux filetages extérieurs (7, 8; 107, 108) présentent chacun un axe de filetage coaxial à l'axe longitudinal central (16) de la pièce intérieure (6).

7. Jonction de tubes selon une ou plusieurs des revendications 1 à 5, caractérisée en ce que le filetage extérieur (8) de la pièce intérieure (6) présente un axe de filetage coaxial à l'axe longitudinal central (16) de cette pièce intérieure (6) et l'autre filetage extérieur (207) présente un axe de filetage (21) qui forme avec l'axe longitudinal central (16) de la pièce intérieure (6) un angle aigu (22).

8. Jonction de tubes selon une ou plusieurs des revendications 1 à 5, caractérisée en ce que deux filetages extérieurs (307, 308) de la pièce intérieure (6) présentent un axe de filetage (34, 36) formant un angle aigu (35, 37) avec l'axe longitudinal central (16) de la pièce intérieure (6).

9. Jonction de tubes selon la revendication 8, caractérisée en ce que les axes (34, 36) des filetages extérieurs (307, 308) s'étendent dans un plan commun.

10. Jonction de tubes selon la revendication 8, caractérisée en ce que les axes (34, 36) des filetages extérieurs (307, 308) sont situés dans des plans contenant l'axe longitudinal central (16) de la pièce intérieure (6) et forment un angle entre eux .

11. Jonction de tubes selon une des revendications 8 à 10, caractérisée en ce que les axes (34, 36) des filetages extérieurs (307, 308) divergent dans des sens opposés par rapport à l'axe longitudinal central (16) de la pièce intérieure (6).

12. Jonction de tubes selon une des revendications 8 à 10, caractérisée en ce que les axes (34, 36) des filetages extérieurs (307, 308) sont infléchis du même côté par rapport à l'axe longitudinal central (16) de la pièce intérieure (6).

13. Jonction de tubes selon une ou plusieurs des revendications 1 à 12, caractérisée en ce que les deux filetages intérieurs (2, 4; 102, 104) présentent un axe coaxial à l'axe longitudinal central de leurs tubes (1, 3).

14. Jonction de tubes selon une ou plusieurs des revendications 1 à 12, caractérisée en ce qu'un filetage intérieur (4) présente un axe coaxial à l'axe longitudinal central de son tube (3) et que l'autre filetage intérieur (202) présente un axe (17) qui forme un angle aigu (19) avec l'axe longitudinal central (18) de son tube (1).

15. Jonction de tubes selon une ou plusieurs des revendications 1 à 12, caractérisée en ce que les deux filetages intérieurs (302, 304) présentent un axe (30, 38) formant chacun un angle aigu (33, 40) avec l'axe longitudinal central (31, 39) de leur tube (1, 3).

16. Jonction de tubes selon une ou plusieurs des revendications 1 à 15, caractérisée en ce que les surfaces d'about (12, 13, 14, 15) de chaque paire de surfaces d'about située entre la pièce extérieure (9) et un tube (1, 3) présentent une orientation parallèle.

17. Jonction de tubes selon une ou plusieurs des revendications 1 à 16, caractérisée en ce que les surfaces d'about (313, 315) d'une paire de surfaces d'about présentent une résistance de friction accrue ou sont dotées de cannelures ou de dentelures.

18. Jonction de tubes selon une ou plusieurs des revendications 1 à 17, caractérisée en ce que les tubes (1, 3) font partie d'un dispositif autonome de jonction de tubes et sont chacun dotés d'un filetage de raccordement à leur extrémité opposée à celle portant un filetage intérieur (2, 4).
